# FASCICULE DE BREVET EUROPEEN

(11) **EP 1 467 852 B1**
(45) Date de publication et mention de la délivrance du brevet: **05.03.2008**
(21) Numéro de dépôt: 02804601.9
(22) Date de dépôt: 10.12.2002
(51) Int. Cl.: B29C 70/32, B29C 70/86, B65D 90/50

(54) **PROCEDE DE FABRICATION PAR CENTRIFUGATION DE VIROLES A DOUBLE PAROI.**
VERFAHREN ZUR HERSTELLUNG VON DOPPELWANDIGEN MÄNTELN DURCH ZENTRIFUGIEREN
METHOD FOR MAKING DOUBLE-WALL SHELLS BY CENTRIFUGING

(30) Priorité: 10.12.2001 FR 0115905
(43) Date de publication de la demande: 20.10.2004
(73) Titulaire: Tartar, Adolphe, 62560 Merck Saint Lievin (FR)
(72) Inventeur: Tartar, Adolphe, 62560 Merck Saint Lievin (FR)
(74) Mandataire: Intes, Didier Gérard André
(86) Numéro de dépôt international: PCT/FR2002/004248
(87) Numéro de publication internationale: WO 2003/049927

(56) Documents cités:
- EP-A- 0 760 346
- DE-A- 2 637 683
- DE-B- 1 209 728
- US-A- 4 821 915

## Description

L'invention concerne un procédé de fabrication, par centrifugation, de viroles à double paroi en matériau plastique renforcé par des fibres.

Dans le procédé de fabrication par centrifugation de viroles on réalise une paroi en projetant des fibres de verre et de la résine à l'état liquide vers la face interne d'un moule cylindrique en rotation autour de son axe horizontal. Ce procédé est communément utilisé pour réaliser des viroles de grandes dimensions qui ont des longueurs pouvant atteindre 12 mètres et des diamètres atteignant 4,2 mètres. Le moule constitué de deux demi-coquilles, fixées entre elles par boulonnage selon un plan de joint radial, est entraîné en rotation sur un berceau au moyen de galets à une vitesse pouvant atteindre 50 à 60 tours par minute. Le procédé actuel ne permet de réaliser que des viroles ou cuves ayant une seule paroi en superposant plusieurs couches de matière. La première couche, nommée gel-coat, sert principalement à faciliter le démoulage, à donner une couleur teintée dans la masse et un aspect esthétique correct. De plus, en ajoutant des adjuvants, cette couche permet de protéger la cuve des agressions extérieures.

La seconde couche est l'âme centrale de la paroi. Elle est composée par l'association de résine de polyester et de fibres de verre. Ce composite donne la résistance mécanique nécessaire à la virole.

La troisième et dernière couche est appelée Top-coat. Sa caractéristique principale est de donner un état de surface lisse pour un bon écoulement des produits qui seront stockés dans la cuve. Il sert aussi à protéger le composite des agressions du produit stocké.

Avant de réaliser la virole, on installe à une extrémité du moule, l'élément qui constituera le fond de la cuve et qui sera solidaire à la virole après la fabrication de cette dernière.

Les divers ingrédients sont déposés à l'intérieur du moule en rotation au moyen d'un bras télescopique disposé dans l'axe du moule. Ce bras se déploie de 12 mètres afin de permettre la dépose notamment des constituants nécessaires à l'obtention du composite. La résine, acheminée par des tuyaux, transite par un bac afin de réguler sa pression avant la dépose dans la virole.

Un broyeur installé au bout du bras télescopique permet de déposer des fibres de longueur bien définie. Après la dépose des produits et de la fibre de verre, un système de rouleaux tasseurs permet d'homogénéiser le composite en faisant sortir les bulles d'air présentes dans le mélange. Le moulage se fait ainsi par projection de résine armée dans le moule en rotation. La résine se maintient grâce à la force centrifuge. Puis les rouleaux tasseurs viennent ébuler la résine.

Lorsque la virole est réalisée, il ne reste plus qu'à la démouler. Pour cela, on procède d'abord à l'ouverture du moule par écartement des deux demi-coquilles, puis on procède à l'extraction de la virole au moyen de chariots supportant les extrémités de la virole et se déplaçant parallèlement à l'axe du moule.

Les cuves issues de ces viroles de grandes dimensions sont communément utilisées pour le stockage de grains ou de produits chimiques. Dans ce type de stockage, l'axe des cuves est vertical.

Un besoin existe pour le stockage de produits divers dans des cuves enterrées. Dans ces conditions, les cuves sont disposées à l'horizontal, et leurs parois doivent pouvoir supportées des charges conséquentes. Il est évidemment possible d'augmenter l'épaisseur de la paroi, mais ceci se traduit par un coût de matière prohibitif et par une augmentation de poids conséquente.

WO 93/07073 et EP 0 760 346 dévoilent des procédés pour réaliser des cuves ayant deux parois concentriques reliées par des entretoises. Dans ces deux documents, on réalise la paroi interne autour d'un mandrin, puis on réalise les entretoises et la paroi externe. Dans WO 93/07073, on applique sur la paroi interne une mousse de forme nervurée avant de réaliser les entretoises par dépôt de résine et de fibres de verre. Dans EP 0 760 346, on dépose sur la face externe de la paroi intérieure, une enveloppe nervurée formant des cavités autour de la paroi interne et une enveloppe cylindrique afin que la résine constituant la paroi externe ne remplisse pas les sillons.

Le but de l'invention est de proposer un procédé de fabrication de viroles à double paroi dans lequel tout le matériau plastique est déposé par centrifugation.

L'invention concerne donc un procédé de fabrication, par centrifugation, de viroles à double paroi en matériau plastique renforcé par des fibres, procédé selon lequel on réalise la paroi externe en projetant des fibres de verre et de la résine à l'état liquide vers la face interne d'un moule cylindrique en rotation autour de son axe horizontal.

Le procédé selon l'invention est caractérisé par le fait qu'après avoir réalisé la paroi externe de la virole, on applique contre la face interne de ladite partie externe, un profilé métallique constitué d'une pluralité de spires ayant un diamètre sensiblement égal au diamètre interne de la première paroi et séparées l'une de l'autre d'une distance sensiblement égale à l'épaisseur de la paroi externe, ledit profilé de section en U ayant une âme et deux ailes latérales qui s'étendent radialement vers l'extérieur et dont les bords libres pénètrent dans le matériau constituant ladite paroi externe afin de délimiter un conduit hélicoïdal étanche qui s'étend d'une extrémité à l'autre de ladite virole, puis on remplit l'espace interspire par de la résine par le procédé de centrifugation afin de former une entretoise hélicoïdale, et on réalise la paroi interne par le procédé de centrifugation.

Ainsi, selon le procédé, le matériau constitutif de la virole est un composite homogène. La couche de gel-coat sera d'abord déposée sur la face interne du moule et la couche dite Top-coat sera déposée sur la face interne de la paroi externe en composite.

Très avantageusement, on applique le profilé métallique contre la face interne de la paroi externe, en faisant tourner le moule autour de son axe de rotation, en plaquant contre ladite face du profilé cintré délivré en continu et en quantité appropriée, sensiblement tangentiellement à ladite face interne, par un dispositif de fabrication d'un profilé cintré à partir d'un feuillard, et en déplaçant ledit dispositif et ledit moule axialement relativement l'un par rapport à l'autre pendant ladite application en fonction de la vitesse de rotation du moule.

De préférence, on plaque le profilé cintré délivré au moyen de galets d'appui portés par le dispositif de fabrication.

L'invention concerne également une installation pour la mise en oeuvre du procédé.

Cette installation comporte :
un moule cylindrique susceptible de tourner autour de son axe horizontal ;
un dispositif de fabrication d'un profilé cintré en U comprenant d'amont en aval un dévidoir de feuillard ;
des moyens de transport et de guidage du feuillard délivré par le dévidoir ;
des moyens de formage d'un profilé rectiligne de section en U, à partir du feuillard ;
des moyens de cintrage du profilé de section en U ;
des moyens pour plaquer le profilé cintré entre la face interne de la paroi externe ; et
des moyens d'entraînement, des moyens de transport, des moyens de formage et des moyens de cintrage ;
des moyens pour déplacer axialement ledit dispositif de fabrication par rapport au moule ; et
des moyens de commande desdits moyens d'entraînement et desdits moyens de déplacement axial en synchronisme avec la vitesse de rotation du moule.

De préférence, les moyens de formage comportent au moins trois paires de galets de formage disposés sensiblement perpendiculairement à l'axe de rotation du moule.

Avantageusement, les moyens de cintrage comportent une paire de galets de guidage fixes destinés à maintenir le profilé en U et à éviter de reporter l'effort de cintrage sur les moyens de formage et deux galets de cintrage disposés de part et d'autre de l'âme dudit profilé et décalés dans le sens du défilement du profilé, lesdits galets de cintrage étant réglables perpendiculairement à la direction du défilement dudit profilé afin de délivrer un profilé cintré ayant un rayon de courbure prédéterminé, sensiblement tangentiellement à la face interne de la paroi externe.

D'autres avantages et caractéristiques de l'invention ressortiront à la lecture de la description suivante faite à titre d'exemple et en référence aux dessins annexés dans lesquels :
la figure 1 est une vue frontale du moule utilisé pour la fabrication d'une virole par centrifugation, de son support et des moyens d'entraînement du moule en rotation .
La figure 2 est une coupe selon la ligne II-II de la figure 1 ;
la figure 3 est une section selon un plan radial du moule et de la virole réalisée selon le procédé de l'invention ;
la figure 4 est une vue latérale de l'installation qui montre un exemple du dispositif de fabrication d'un profilé cintré en U ;
la figure 5 est une vue frontale du dispositif de fabrication du profilé cintré en U.

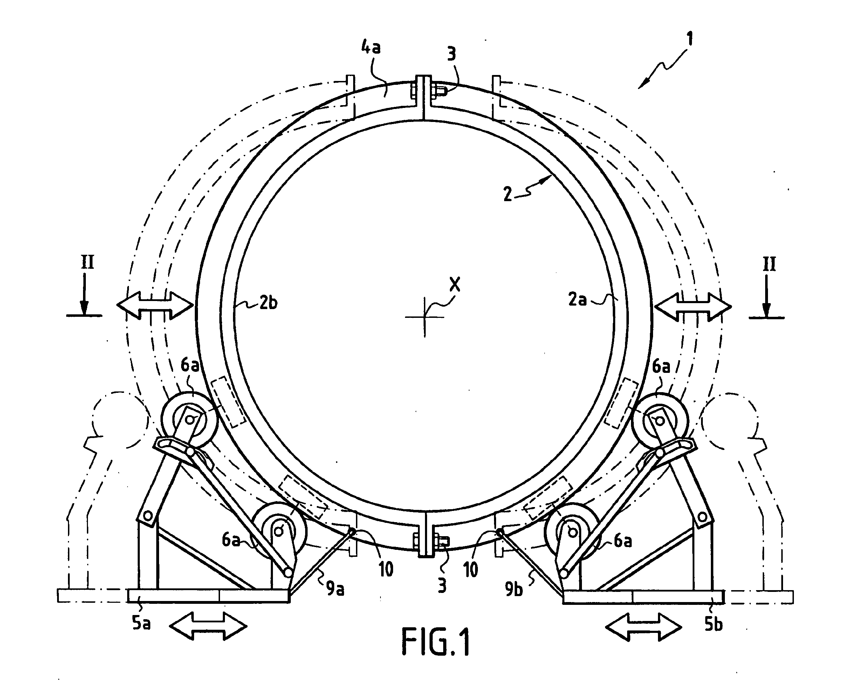

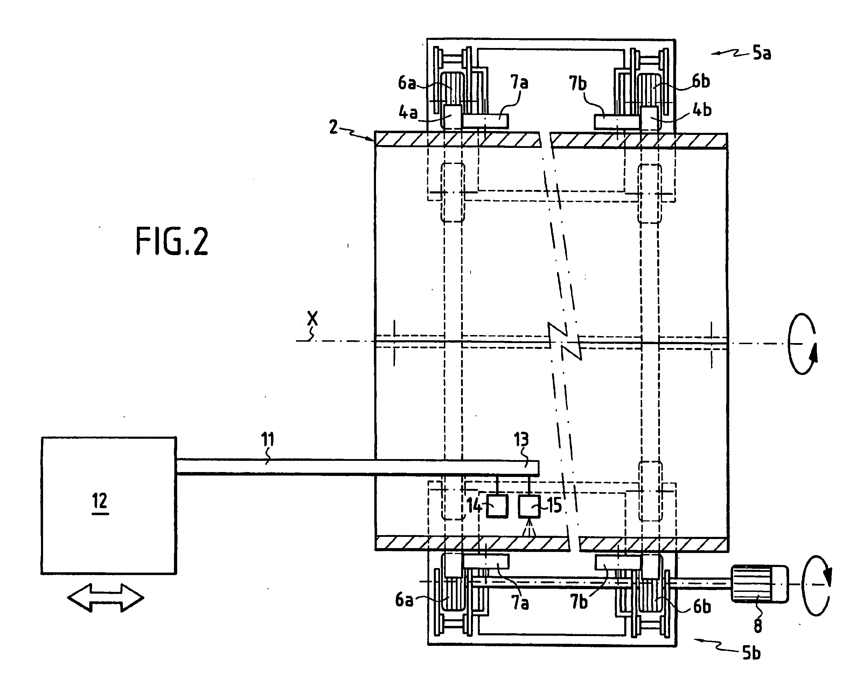

les figures 1 et 2 montrent une installation 1 traditionnelle pour réaliser une virole monoparoi selon l'état de la technique.

Cette installation 1 comporte essentiellement un moule cylindrique 2, réalisé en deux demi-coquilles séparables 2a, 2b selon un plan médian contenant l'axe horizontal X du moule et susceptibles d'être reliées entre elles par des boulons 3. Le moule 2 présente à sa périphérie des anneaux 4a, 4b qui servent à l'entraîner en rotation. Le moule 2 repose sur deux berceaux latéraux 5a, 5b qui présentent des paires de galets avant et arrière coaxiaux, respectivement 6a et 6b, sur lesquels reposent les anneaux 4a et 4b. Les berceaux 4a et 4b comportent également des galets 7a et 7b d'axe perpendiculaire à l'axe des galets 6a et 6b, qui roulent sur les flancs des anneaux 4a, 4b afin d'immobiliser axialement le moule 2. Deux galets 6a et 6b du berceau 5b par exemple sont entraînés en rotation par un moteur 8, ce qui entraîne la rotation du moule 2, et la rotation des six autres galets 6a, 6b et des galets 7a et 7b.

Les deux berceaux 5a et 5b peuvent être écartés l'un de l'autre par des vérins, par exemple pour permettre le démoulage par ouverture du moule 2 après enlèvement des boulons 3, le plan de joint étant alors vertical et, les bords inférieurs des deux demi-coquilles 2a et 2b étant alors reliés aux berceaux 5a et 5b par des câbles 9a, 9b fixés sur des crochets 10 équipant lesdites demi-coquilles 2a et 2b.

Pour le moulage d'une virole, les deux demi-coquilles 2a et 2b sont rapprochées l'une de l'autre par rapprochement des berceaux 5a et 5b, puis boulonnées et les câbles 9a et 9b sont décrochés. La mise en route du moteur 8 entraîne la rotation du moule 2.

L'installation 1 comporte en outre un bras télescopique 11 monté sur un châssis 12 extérieur au moule 2. L'extrémité 13 du bras télescopique peut être déplacée parallèlement à l'axe X. Cette extrémité comporte un broyeur 14 de fibres de verre et un bac 15 recevant une résine sous forme liquide. En fonctionnement, des fibres de verre et de la résine sont projetées contre la paroi interne du moule en rotation. Cette résine liquide reste contre la paroi du moule par suite de la force centrifuge. Pour réaliser une épaisseur donnée de paroi, l'extrémité 13 du bras télescopique est déplacée en va-et-vient sur toute la longueur du moule 2.

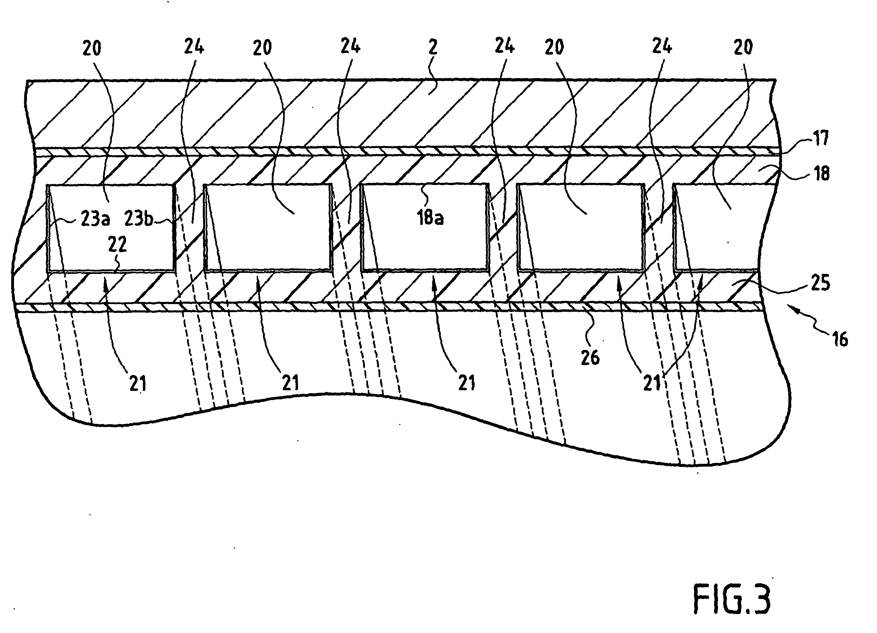

La figure 3 montre la structure de la virole 16 obtenue par l'invention :
cette virole 16 présente de l'extérieur vers l'intérieur :
   a) une couche extérieure 17 de gel-coat déposée par le procédé de centrifugation connu ;
   b) une paroi extérieure 18 en matériau composite, résine de polyester renforcée par des fibres de verre, cette couche étant déposée par le procédé de centrifugation connu décrit plus haut dans le présent mémoire ;
   c) une zone de liaison comportant d'une part un espace vide 20 hélicoïdal délimité par la face interne 18a de la paroi extérieure 18 et la face interne d'un profilé cintré 21 de section en U ayant une âme 22 et deux ailes latérales 23a et 33b qui s'étendent radialement vers l'extérieur et dont les bords sont en appui étanche contre la face interne 18a de la paroi extérieure 18, ledit profilé cintré 21 comportant une pluralité de spires et s'étendant d'une extrémité à l'autre de la virole 16, et comportant, d'autre part, une entretoise 24 hélicoïdale qui remplit l'espace entre les spires du profilé cintré 21, et qui est réalisée en résine de polyester éventuellement chargée de fibres de verre par le procédé de centrifugation ;
   d) une paroi intérieure 25 en matériau composite, résine de polyester renforcée par des fibres de verre, déposée par le procédé de centrifugation ; et
   e) une couche intérieure 26 dite Top-Coat déposée par le procédé de centrifugation.

Les épaisseurs des parois 18 et 25 sont par exemple de 7 mm, et l'épaisseur de l'entretoise hélicoïdale 24, dans la direction axiale du moule 2, est par exemple de 7 mm.

L'âme 22 du profilé cintré 21 a par exemple une largeur de 30 mm et les ailes 23a et 23b ont une dimension radiale de 20 mm. Avec ces dimensions, le volume de l'espace hélicoïdal vide 20 est sensiblement égal à la moitié du volume de la virole 16.

Selon le procédé de l'invention, après avoir déposé la paroi extérieure 18, procédé à l'ébullage de cette paroi et laissé polymériser au moins partiellement, on applique le profilé cintré en U 21 contre la face interne 18a de la paroi extérieure 18 et on remplit l'espace hélicoïdal interspire par de la résine de polyester éventuellement chargée de fibres de verre pour réaliser l'entretoise hélicoïdale 24 qu'on laisse polymériser au moins partiellement puis on réalise la paroi extérieure 25 et la couche dite Top-Coat 26.

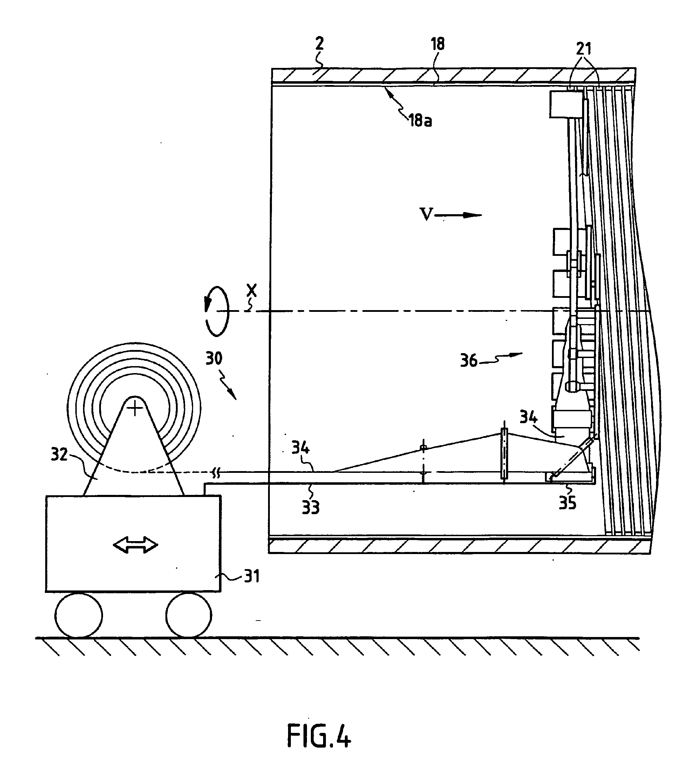

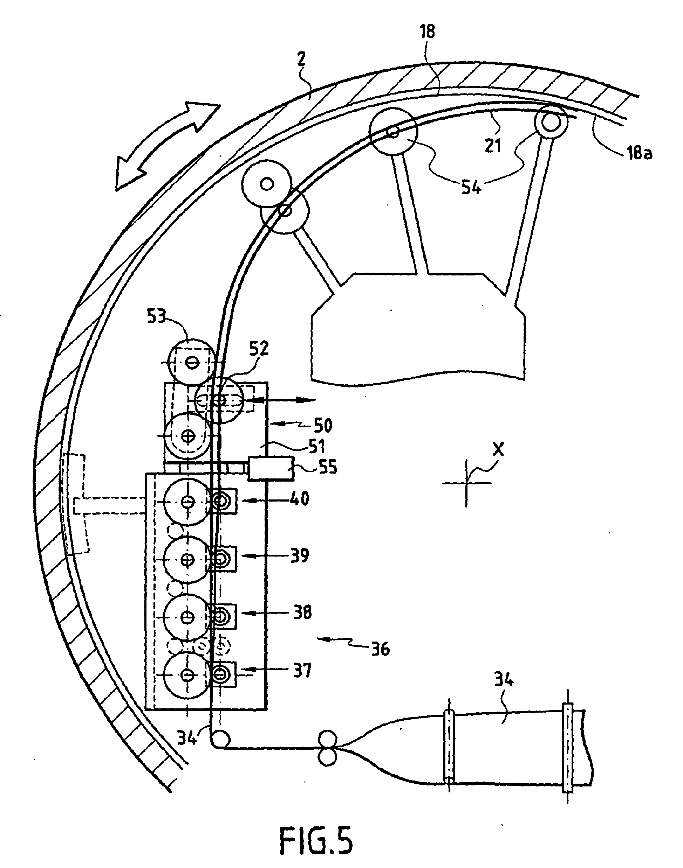

Les figures 4 et 5 montrent un dispositif 30 pour la fabrication et la pose du profilé en U cintré 21 décrit ci-dessus contre la face interne 18a de la paroi extérieure 18.

Ce dispositif 30 comporte un bâti 31, éventuellement monté sur rails, qui est disposé à l'extérieur du moule 2, et qui supporte un dévidoir 32 de feuillard et une tige rigide 33 ou bras télescopique, disposé parallèlement à l'axe X du moule 2. La tige 8 comporte des moyens de transport et de guidage du feuillard 34 vers l'extrémité 35 de la tige 8.

L'extrémité 35 de la tige 33 supporte des moyens pour changer la direction de défilement du feuillard 34, afin de permettre l'alimentation en continu d'un dispositif de fabrication 36 du profilé cintré 21 à partir du feuillard 34, ce dispositif 36 étant porté par l'extrémité 35 de la tige 33.

Le dispositif 36 comprend essentiellement quatre paires alignées de galets d'axes parallèles à l'axe X du moule, qui permettent de réaliser à partir du feuillard 34 un profilé rectiligne en U, dont les ailes s'étendent vers la zone de paroi de moule la plus proche et dont le cheminement est perpendiculaire à l'axe X. La première paire de galets 37 permet un guidage précis du feuillard 35. La deuxième paire de galets 38 plie les bords du feuillard à 30°, la troisième paire de galets 39, les plie à 60°, et la quatrième paire de galets 40 les plie à 90°.

En aval des quatre paires de galets 37, 38, 39 et 40, dans le sens du défilement du feuillard 34, est prévu un dispositif de cintrage 50 réglable qui comporte une première paire de galets 51 fixes destinés à maintenir le guidage du profilé rectiligne en U, un premier galet de cintrage 52 en appui sur la face externe de l'âme 22 du profilé 21 et un deuxième galet de cintrage 53 en appui sur la face interne de l'âme 22 du profilé 21 et situé en aval du premier galet de cintrage 52.

Les deux galets de cintrage 52 et 53 sont déplaçables et réglables dans une direction sensiblement perpendiculaire au chemin de défilement du profilé 21 afin de permettre le réglage du rayon de courbure du profilé cintré 21 obtenu en fonction du rayon du moule 2, et afin que le profilé cintré 21 sortant du dispositif de centrage 50 puisse venir sensiblement tangentiellement toucher la face interne 18a de la paroi externe 18. A la sortie du dispositif de cintrage 50, il est prévu des galets 54 qui permettent de plaquer le profilé en U 21 contre la face interne 18a de la paroi externe 18, afin que les bords des ailes 23a et 23b pénètrent suffisamment dans la paroi externe 18 pour assurer l'étanchéité de la cavité hélicoïdale 20, afin que la résine liquide qui remplira ultérieurement l'espace interspire ne pénètre pas dans cette cavité hélicoïdale 20.

En pratique, le rayon de courbure du profilé cintré sortant du dispositif de cintrage 50 est inférieur au rayon de la paroi extérieure 18, et les galets 54 ont pour deuxième fonction de décintrer le profilé cintré 21.

L'ensemble des divers galets du dispositif de fabrication 36 du profilé cintré 21 sont entraînés en rotation par un moteur 55 en synchronisme avec la vitesse de rotation du moule 2, afin de fournir du profilé cintré 21 en fonction des besoins. De préférence, le couple de ce moteur 55 est suffisant pour que le profilé fourni vienne appuyer positivement contre la paroi interne 18a de la paroi externe 18.

L'extrémité 35 de la tige 33 est également déplacée parallèlement à l'axe X par rapport au moule 2 proportionnellement à la vitesse de rotation du moule 2 afin que la distance interspire soit constante, au cours de la dépose. Ce déplacement peut être réalisé au moyen d'un moteur agissant sur la longueur de la tige 33, s'il s'agit d'un bras télescopique, sur le déplacement axial du bâti 31 s'il est monté sur des rails, ou sur le déplacement axial des berceaux 5a et 5b supportant le moule 2.

Le synchronisme est avantageusement réalisé au moyen d'un dispositif de commande des différents moteurs qui reçoit des signaux d'un codeur d'angle associé au moule 2.

## Revendications

1. Procédé de fabrication, par centrifugation, de viroles à double paroi en matériau plastique renforcé par des fibres, procédé selon lequel on réalise la paroi externe (18) en projetant des fibres de verre et de la résine à l'état liquide vers la face interne d'un moule cylindrique (2) en rotation autour de son axe (X) horizontal,
**caractérisé par le fait qu'**après avoir réalisé la paroi externe (18) de la virole (16), on applique contre la face interne (18a) de ladite paroi externe (18) un profilé métallique (21) constitué d'une pluralité de spires ayant un diamètre sensiblement égal au diamètre interne de la première paroi (18) et séparées l'une de l'autre d'une distance sensiblement égal à l'épaisseur de la paroi externe, ledit profilé de section en U ayant une âme (22) et deux ailes latérales (23a, 23b) qui s'étendent radialement vers l'extérieur et dont les bords libres pénètrent dans le matériau constituant ladite paroi externe (18) afin de délimiter un conduit hélicoïdal (20) étanche qui s'étend d'une extrémité à l'autre de ladite virole (18), puis on remplit l'espace interspire par de la résine par le procédé de centrifugation afin de former une entretoise hélicoïdale (24), et on réalise la paroi interne (25) par le procédé de centrifugation.

2. Procédé selon la revendication 1, **caractérisé par le fait qu'**on applique le profilé métallique (21) contre la face interne (18a) de la paroi externe (18), en faisant tourner le moule (2) autour de son axe (X) de rotation en plaquant contre ladite face du profilé cintré délivré en continu et en quantité appropriée, sensiblement tangentiellement à ladite face interne, par un dispositif de fabrication (36) d'un profilé cintré à partir d'un feuillard (34), et en déplaçant ledit dispositif (36) et ledit moule (2) axialement relativement l'un par rapport à l'autre pendant ladite application en fonction de la vitesse de rotation du moule (2).

3. Procédé selon la revendication 2, **caractérisé par le fait que** l'on plaque le profilé cintré délivré au moyen de galets d'appui (54) portés par le dispositif de fabrication (36).

4. Installation pour la mise en oeuvre du procédé selon l'une des revendications 2 ou 3, **caractérisée par le fait qu'**elle comporte :
un moule cylindrique susceptible de tourner autour de son axe (X) horizontal ;
un dispositif de fabrication (36) d'un profilé cintré en U comprenant d'amont en aval un dévidoir (31) de feuillard ;
des moyens de transport et de guidage du feuillard (34) délivré par le dévidoir (31) ;
des moyens de formage (37, 38, 39, 40) d'un profilé rectiligne de section en U, à partir du feuillard (34) ;
des moyens de cintrage (50) du profilé de section en U ;
des moyens (54) pour plaquer le profilé cintré (21) contre la face interne (18a) de la paroi externe (18) ; et
des moyens d'entraînement des moyens de transport, des moyens de formage et des moyens de cintrage ; et
des moyens pour déplacer axialement ledit dispositif de fabrication par rapport au moule, et des moyens de commande desdits moyens d'entraînement et desdits moyens de déplacement axial en synchronisme avec la vitesse de rotation du moule.

5. Installation selon la revendication 4, **caractérisé par le fait que** les moyens de formage comportent au moins trois paires de galets de formage (37, 38, 39) disposés sensiblement perpendiculairement à l'axe (X) de rotation du moule (2).

6. Installation selon la revendication 5, **caractérisé par le fait que** les moyens de cintrage (50) comportent une paire de galets de guidage (51) fixes destinés à maintenir le profilé en U et à éviter de reporter l'effort de cintrage sur les moyens de formage et deux galets de cintrage (52, 53) disposés de part et d'autre de l'âme (22) dudit profilé (21) et décalés dans le sens du défilement du profilé, lesdits galets de cintrage étant réglables perpendiculairement à la direction du défilement dudit profilé afin de délivrer un profilé cintré ayant un rayon de courbure prédéterminé, sensiblement tangentiellement à la face interne (18a) de la paroi externe (18).

## Claims

1. A method of fabricating double-walled shells of fibre reinforced plastic material by centrifuging, in which method the outer wall (18) is made by projecting glass fibres and resin in the liquid phase against the inside face of a cylindrical mould (2) rotating about its axis (X) which is horizontal,
the method being **characterised by** the fact that after the outer wall (18) of the shell (16) has been made, a metal section member (21) constituted by a plurality of turns having a diameter substantially equal to the inside diameter of the outer wall (18) and separated from one another by a distance substantially equal to the thickness of the outer wall is applied against the inside face (18a) of said outer wall (18), said section member having a channel section with a web (22) and two flanges (23a, 23b) extending radially outwards having free edges, with their free edges penetrating into the material constituting said outer wall (18) so as to define a helical duct (20) that is sealed and that extends from one end to the other of said shell (16), after which the inter-turn space is filled with the resin by the centrifuging method in order to form a helical spacer (24), and the inner wall (25) is made by the centrifuging method.

2. A method according to claim 1, **characterised by** the fact that the metal section member (21) is applied against the inside face (18a) of the outer wall (18) by causing the mould (2) to turn about its axis (X) of rotation while the curved section member is being pressed against said face, said section member being delivered continuously and in appropriate quantity substantially tangentially to said inside face, by a device (36) for fabricating a curved section member from a metal strip (34), and by displacing said device (36) and said mould (2) axially relative to each other while the section member is being applied as a function of the speed of rotation of the mould (2).

3. A method according to claim 2, **characterised by** the fact that the delivered curved section member is pressed by means of presser wheels (54) carried by the fabrication device (36).

4. An installation for implementing the method according to claim 2 or claim 3, said installation being **characterised by** the fact that it comprises:
a cylindrical mould suitable for turning about its axis (X), which is horizontal;
a fabrication device (36) for fabricating a curved channel section member, the device comprising a metal-strip dispenser (31) from upstream to downstream;
transport means and guiding means to transport and guide the metal strip (34) delivered by the dispenser (31);
means (37, 38, 39, 40) for forming a rectilinear channel section member from the metal strip (34);
means (50) for curving the channel section member;
means (54) for pressing the curved section member (21) against the inside face (18a) of the outer wall (18); and
drive means for driving the transport means, the forming means, and the curving means; and
means for displacing said fabrication device axially relative to the mould, and control means for controlling said drive means and said axial displacement means synchronously with the speed of rotation of the mould.

5. An installation according to claim 4, **characterised by** the fact that the forming means comprise at least three pairs of forming wheels (37, 38, 39) disposed substantially perpendicularly to the axis (X) of rotation of the mould (2).

6. An installation according to claim 5, **characterised by** the fact that the curving means (50) comprise a pair of stationary guide wheels (51) for holding the channel section member and preventing the curving force being transferred to the forming means, and two curving wheels (52, 53) disposed on either side of the web (22) of said section member (21) and offset in the travel direction of the section member, said curving wheels being adjustable perpendicular to the travel direction of said section member in order to deliver a curved section member having a predetermined radius of curvature, the section member being delivered substantially tangentially to the inside face (18a) of the outer wall (18).

## Patentansprüche

1. Verfahren zur Herstellung von doppelwandigen Mänteln aus faserverstärktem Kunststoff durch Zentrifugieren, bei dem die Außenwand (18) durch Schleudern von Glasfasern und Harz im flüssigen Zustand auf die Innenfläche einer zylindrischen Form (2), die sich um ihre Horizontalachse (X) dreht, hergestellt wird,
**dadurch gekennzeichnet, daß** nach Herstellung der Außenwand (18) des Mantels (16) an die Innenfläche (18a) der Außenwand (18) ein Metallprofil (21) angelegt wird, das aus einer Vielzahl von Windungen mit einem Durchmesser im wesentlichen gleich dem Innendurchmesser der ersten Wand (18) gebildet ist, die voneinander um einen Abstand im wesentlichen gleich der Dicke der Außenwand getrennt sind, wobei das Profil mit U-förmigem Querschnitt einen Kern (22) und zwei Seitenflügel (23a, 23b) aufweist, die sich radial nach außen erstrecken und deren freie Ränder in das Material eindringen, das die Außenwand (18) bildet, um eine dichte spiralförmige Leitung (20) zu begrenzen, die sich von einem Ende des Mantels (18) zum anderen erstreckt, dann der Raum zwischen den Windungen mit Harz durch das Zentrifugierverfahren aufgefüllt wird, um eine spiralförmige Querstrebe (24) zu bilden, und die Innenwand (25) durch das Zentrifugierverfahren hergestellt wird.

2. Verfahren nach Anspruch 1, **dadurch gekennzeichnet, daß** das Metallprofil (21) an die Innenfläche (18a) der Außenwand (18) angelegt wird, wobei die Form (2) um ihre Drehachse (X) gedreht wird, wobei an die Fläche des gebogenen Profils, das kontinuierlich und in geeigneter Menge, im wesentlichen tangential zur Innenfläche, durch eine Vorrichtung (36) zur Herstellung eines gebogenen Profils aus einem Bandmaterial (34) bereitgestellt wird, angelegt wird, und wobei die Vorrichtung (36) und die Form (2) axial zueinander während des Anlegens in Abhängigkeit von der Drehgeschwindigkeit der Form (2) verschoben werden.

3. Verfahren nach Anspruch 2, **dadurch gekennzeichnet, daß** das bereitgestellte gebogene Profil mit Hilfe von Stützrollen (54) die von der Herstellungsvorrichtung (36) getragen werden, angelegt wird.

4. Anlage für den Einsatz des Verfahrens nach einem der Ansprüche 2 oder 3, **dadurch gekennzeichnet, daß** sie umfaßt:
eine zylindrische Form, die sich um ihre Horizontalachse (X) drehen kann;
eine Vorrichtung (36) zur Herstellung eines U-förmig gebogenen Profils, umfassend stromaufwärts nach stromabwärts einen Bandabwickler (31);
Mittel für den Transport und die Führung des von dem Abwickler (31) gelieferten Bandes (34);
Mittel (37, 38, 39, 40) zum Formen eines geraden Profils mit U-förmigem Querschnitt aus dem Bandmaterial (34);
Mittel (50) zum Wölben des Profils mit U-förmigem Querschnitt;
Mittel (54), um das gebogene Profil (21) an die Innenfläche (18a) der Außenwand (18) anzulegen; und
Antriebsmittel für die Transportmittel, die Formungsmittel und die Biegemittel; und
Mittel, um die Herstellungsvorrichtung in Bezug zur Form axial zu verschieben, und Mittel zum Steuern der Antriebsmittel und Axialverschiebemittel synchron mit der Drehgeschwindigkeit der Form.

5. Anlage nach Anspruch 4, **dadurch gekennzeichnet, daß** die Formungsmittel mindestens drei Formungsrollenpaare (37, 38, 39) umfassen, die im wesentlichen senkrecht auf die Drehachse (X) der Form (2) angeordnet sind.

6. Anlage nach Anspruch 5, **dadurch gekennzeichnet, daß** die Biegemittel (50) ein festes Führungsrollenpaar (51), das dazu bestimmt ist, das U-förmige Profil zu halten und zu vermeiden, daß die Biegekraft auf die Formungsmittel übertragen wird, und zwei Biegewalzen (52, 53) umfassen, die beiderseits des Kerns (22) des Profils (21) angeordnet und in Ablaufrichtung des Profils versetzt sind, wobei die Biegewalzen senkrecht auf die Ablaufrichtung des Profils einstellbar sind, um ein gebogenes Profil mit einem vorbestimmten Krümmungsradius im wesentlichen tangential zur Innenfläche (18a) der Außenwand (18) zu liefern.
